# DEMANDE DE BREVET EUROPEEN

(11) **EP 3 702 967 A1**
(43) Date de publication de la demande: **02.09.2020**
(21) Numéro de dépôt: 19177858.8
(22) Date de dépôt: 03.06.2019
(51) Int. Cl.: G06K 9/62, G06K 9/20

(54) **PROCÉDÉ DE TRAITEMENT D'IMAGE ASSISTÉ PAR ORDINATEUR, POUR LA LECTURE D'UN MARQUAGE SUR UNE SURFACE D'UN SUPPORT EN PEAU D'ANIMAUX**

(30) Priorité: 28.02.2019 FR 1902067
(71) Demandeur: CTC, 69007 Lyon (FR)
(72) Inventeur: EDMUNDS, Taiamiti, 38100 GRENOBLE (FR); LIENHARD, Olivier, 67670 WALTENHEIM SUR ZORN (FR); LAROCHE JOUBERT, Vianney, 42000 SAINT ETIENNE (FR); VIGIER, Cédric, 69250 MONTANAY (FR)
(74) Mandataire: Verriest, Philippe

(57) **Abrégé**

Procédé (100) de traitement d'image assisté par ordinateur, pour la lecture d'un marquage sur une surface d'un support en peau d'animal, le procédé comprenant les étapes suivantes :
- acquisition (101) par une caméra d'une image de la surface du support;
- détection (103) d'une zone de marquage (ZM), ladite étape de détection comprenant un premier traitement appliqué à l'intérieur d'une fenêtre, ladite fenêtre étant une partie de l'image et ladite zone de marquage étant une portion de l'image incluse dans ladite partie de l'image;
- détermination (105) d'une orientation de la zone de marquage (ZM), ladite détermination comprenant un deuxième traitement;
- détection (106) des caractères compris dans la zone de marquage (ZM), ladite détection comprenant un troisième traitement appliqué à une nouvelle image de la zone de marquage (ZM), la nouvelle image étant obtenue à partir de la portion de l'image correspondant à la zone de marquage (ZM) par un calcul réalisé en fonction de l'orientation déterminée à l'étape précédente;
- classification (107, 108) de chaque caractère détecté dans la nouvelle image de la zone de marquage (ZM) ;
- ordonnancement (109) des caractères détectés et classifiés dans la nouvelle image de la zone de marquage (ZM), selon un sens de lecture des caractères défini sur la base de l'orientation de la zone de marquage.

## Description

La présente invention concerne le domaine la reconnaissance optique de caractères pour la lecture de marquage sur des peaux d'animaux.

Il est connu de reconnaître par traitement d'image les caractères imprimés sur un support papier. Mais ces procédés connus de reconnaissance de caractères ne donnent pas des résultats satisfaisants sur des caractères imprimés sur d'autres supports que le papier, en particulier imprimés sur des supports en peaux d'animaux. Notamment, lorsque le marquage de la peau d'animal est réalisé avant le tannage de la peau, ce dernier abîme le marquage qui devient difficile, voire impossible, à relire ensuite avec les procédés connus de reconnaissance par traitement d'image.

L'invention a donc pour but de proposer une solution à tout ou partie de ces problèmes.

A cet effet, la présente invention concerne un procédé de traitement d'image assisté par ordinateur, pour la lecture d'un marquage sur une surface d'un support en peau d'animal, le procédé comprenant les étapes suivantes :
- acquisition par une caméra d'une image de la surface du support;
- détection d'une zone de marquage, ladite étape de détection comprenant un premier traitement appliqué à l'intérieur d'une fenêtre, ladite fenêtre étant une partie de l'image et ladite zone de marquage étant une portion de l'image incluse dans ladite partie de l'image;
- détermination d'une orientation de la zone de marquage, ladite détermination comprenant un deuxième traitement;
- détection des caractères compris dans la zone de marquage, ladite détection comprenant un troisième traitement appliqué à une nouvelle image de la zone de marquage, la nouvelle image étant obtenue à partir de la portion de l'image correspondant à la zone de marquage par un calcul réalisé en fonction de l'orientation déterminée à l'étape précédente;
- classification de chaque caractère détecté dans la nouvelle image de la zone de marquage;
- ordonnancement des caractères détectés et classifiés dans la nouvelle image de la zone de marquage, selon un sens de lecture des caractères défini sur la base de l'orientation de la zone de marquage.

Selon un mode de mise en oeuvre, l'invention comprend une ou plusieurs des caractéristiques suivantes, seules ou en combinaison.

Selon un mode de mise en oeuvre, la caméra comprend un capteur matriciel, ou un capteur linéaire.

Selon un mode de mise en oeuvre, la caméra comprend un capteur linéaire et l'au moins une image acquise à l'étape d'acquisition est une image de grande taille, de résolution élevée, par exemple une image comprenant 14000 lignes, chaque ligne comprenant 8192 pixels.

Selon un autre mode de mise en oeuvre, la caméra comprend un capteur matriciel, de taille et de résolution moins élevée qu'un capteur linéaire.

Selon un mode de mise en oeuvre, le procédé comprend une étape de définition d'au moins deux fenêtres de traitement à l'intérieur d'une partie présélectionnée de l'image, chaque fenêtre recouvrant partiellement au moins une autre fenêtre de l'au moins deux fenêtres.

Selon un mode de mise en oeuvre, le procédé comprend une étape de définition d'au moins trois fenêtres de traitement à l'intérieur d'une partie présélectionnée de l'image, chaque fenêtre recouvrant partiellement au moins une autre fenêtre de l'au moins trois fenêtres.

Selon un mode de mise en oeuvre, à l'intérieur de la partie sélectionnée de l'image, trois fenêtres de traitement sont définies, chaque fenêtre recouvrant partiellement au moins une autre fenêtre parmi les trois fenêtres. Selon un mode de mise en oeuvre, la partie présélectionnée de l'image est découpée selon trois fenêtres, chaque fenêtre ayant une taille, en nombre de colonnes de pixels, égale à la moitié du nombre de colonne de pixels de la partie présélectionnée. Ainsi, par exemple, la première fenêtre correspond à une première moitié de la partie présélectionnée ; la deuxième fenêtre correspond à une deuxième moitié de la partie présélectionnée ; et la troisième fenêtre correspond à une troisième moitié de la partie présélectionnée, située à cheval sur la première fenêtre et sur la deuxième fenêtre.

Selon un mode de mise en oeuvre, le premier traitement est appliqué à l'intérieur de chaque fenêtre de l'au moins deux fenêtres, l'étape de détection comprenant en outre un calcul d'un score de détection pour chaque zone de marquage détectée à l'intérieur de chaque fenêtre de l'au moins deux fenêtres, et une sous-étape de sélection de la zone de marquage sur la base du score de détection de la zone de marquage.

A l'intérieur de chaque fenêtre, un premier traitement de détection d'une zone de marquage et de calcul d'un score de détection est mis en oeuvre. La zone de marquage détectée avec le meilleur score de détection est, par exemple, sélectionnée pour l'étape suivante de détermination, selon un deuxième traitement, d'une orientation de la zone de marquage.

Par convention, l'orientation du marquage est définie par une direction dans le plan de la surface de la peau sur laquelle est imprimé ledit marquage, ladite direction étant transversale aux lignes de caractères qui constituent ledit marquage. L'orientation peut ainsi se définir par un angle formé entre cette direction et une direction prédéterminée sur la surface de la peau.

Sur la base de l'orientation déterminée, la portion de l'image correspondant à la zone de marquage est utilisée pour calculer une nouvelle image de la zone de marquage, par exemple par un nouvel échantillonnage de ladite portion de l'image, de manière que dans cette nouvelle image, les lignes de caractères compris dans la zone de marquage soient orientées parallèlement aux lignes de la nouvelle image calculée.

Selon un mode de mise en oeuvre, un troisième traitement de détection des caractères est mis en oeuvre sur la nouvelle image de la zone de marquage calculée en fonction de l'orientation déterminée par le deuxième traitement.

Les caractères sont des lettres ou des chiffres.

Selon un mode de mise en oeuvre, la classification de chaque caractère détectés à l'étape de détection des caractères comprend un quatrième traitement de classification des lettres, et un cinquième traitement de classification des chiffres.

Selon un mode de mise en oeuvre, la quatrième traitement de classification des lettres est basé sur un positionnement des lettres au début de l'au moins une ligne.

Selon un mode de mise en oeuvre, le nombre de lettres positionnées sur l'au moins une ligne est prédéterminé, par exemple égal à trois.

Selon un mode de mise en oeuvre, le quatrième traitement de classification des lettres comprend l'utilisation d'un dictionnaire de codes à 3 lettres.

Selon un mode de mise en oeuvre, le cinquième traitement de classification des chiffres s'applique indépendamment à chaque caractère.

Selon un mode de mise en oeuvre, un sens de lecture est défini en fonction de l'orientation de la zone de marquage, par exemple de droite à gauche le long de l'au moins une ligne, et de haut en bas le long d'une direction définie par l'orientation de la zone de marquage.

Selon un mode de mise en oeuvre, le premier traitement de l'étape de détection de la zone de marquage comprend la mise en oeuvre d'un premier réseau de neurone, le premier réseau de neurone étant de préférence du type FASTER-RCNN et comprenant un module INCEPTIONV2.

Selon un mode de mise en oeuvre, le premier traitement de l'étape de détection de la zone de marquage comprend la mise en oeuvre d'un premier réseau de neurone du type FASTER-RCNN et comprenant un module INCEPTIONV2, le premier réseau de neurone étant entraîné au préalable au cours d'une étape d'apprentissage, par exemple déterminée par les paramètres d'apprentissage suivants :
- Résolution d'image : 512x512, la résolution étant ici définie en nombre de lignes d'images x nombres de pixels d'images par ligne d'image;
- Nombre de lots ou batchs : 10 ;
- Algorithme d'optimisation : descente de gradient avec inertie ;
- Nombre d'itérations de backpropagation en nombre de batchs : 12000 ;
- Vitesse d'apprentissage :
   ∘ step 0 -> learning rate : 2^{∗}e⁻⁰⁴
   ∘ step 5000 → learning rate: 2^{∗}e⁻⁰⁵
   ∘ step 8000 → learning rate: 2^{∗}e⁻⁰⁶

Selon un mode de mise en oeuvre, le deuxième traitement de l'étape de détermination d'une orientation de la zone de marquage comprend la mise en oeuvre d'un deuxième réseau de neurone, le deuxième réseau de neurone étant de préférence du type VGG16.

Selon un mode de mise en oeuvre, le deuxième traitement de l'étape de détermination d'une orientation de la zone de marquage comprend la mise en oeuvre d'un deuxième réseau de neurone, le deuxième réseau de neurone étant de préférence du type VGG16, le deuxième réseau de neurone étant entraîné au préalable au cours d'une étape d'apprentissage, par exemple déterminée par les paramètres d'apprentissage suivants :
- Augmentation de données : génération aléatoire d'images de sorte à avoir un grand nombre d'images dont les angles sont compris entre - 90 et 90 degrés;
- Résolution d'image : 224x224, la résolution étant ici définie en nombre de lignes d'images x nombres de pixels d'images par ligne d'image;
- Nombre d'itérations de backpropagation en nombre d'époques: 500 ;
- Algorithme d'optimisation : ADAM

Selon un mode de mise en oeuvre, le troisième traitement de l'étape de détection des caractères compris dans la zone de marquage comprend la mise en oeuvre d'un troisième réseau de neurone, le troisième réseau de neurone étant de préférence du type FASTER-RCNN et comprenant un module INCEPTIONV2.

Selon un mode de mise en oeuvre, le troisième traitement de l'étape de détection des caractères compris dans la zone de marquage comprend la mise en oeuvre d'un troisième réseau de neurone du type FASTER-RCNN et comprenant un module INCEPTIONV2, le troisième réseau de neurone étant entraîné au préalable au cours d'une étape d'apprentissage, par exemple déterminée par les paramètres d'apprentissage suivants :
- Résolution d'image : 340x450, la résolution étant ici définie en nombre de lignes d'images x nombres de pixels d'images par ligne d'image;
- Nombre de lots ou batchs : 10 ;
- Algorithme d'optimisation : descente de gradient avec inertie ;
- Nombre d'itérations de backpropagation en nombre de batchs : 12000 ;
- Vitesse d'apprentissage :
   ∘ step 0 -> learning rate: 2^{∗}e⁻⁰⁴
   ∘ step 5000 → learning rate: 2^{∗}e⁻⁰⁵
   ∘ step 8000 → learning rate: 2^{∗}e⁻⁰⁶

Selon un mode de mise en oeuvre, le quatrième traitement de classification des lettres comprend la mise en oeuvre d'un quatrième réseau de neurone, le quatrième réseau de neurone étant de préférence du type LeNet.

Selon un mode de mise en oeuvre, le cinquième traitement de classification des chiffres comprend la mise en oeuvre d'un cinquième réseau de neurone, le cinquième réseau de neurone étant de préférence du type LeNet.

Pour sa bonne compréhension, un mode de mise en oeuvre de l'invention est décrit en référence au dessin ci-annexé représentant, à titre d'exemple non limitatif, une forme de mise en oeuvre respectivement d'un procédé selon l'invention. Les mêmes références sur les dessins désignent des éléments similaires ou des éléments dont les fonctions sont similaires.

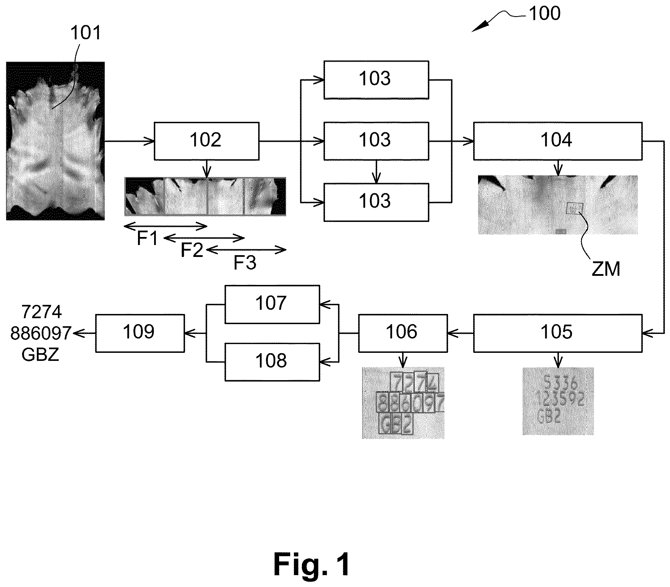

[Fig. 1] est une représentation des étapes du procédé de traitement d'image

Sur la figure 1, les différentes étapes du procédé 100 de traitement d'image selon l'invention sont présentées, en commençant par l'étape 101 d'acquisition d'une image par une caméra. Différents mode d'acquisition de l'image sont possibles ; par exemple, l'image peut être acquise par une caméra équipée d'un capteur matriciel, i.e. dont les détecteurs élémentaires forme une matrice de détecteurs, de sorte que directement, une image numérique est obtenue de la scène observée par l'objectif de la caméra, sans balayage par le capteur de la scène observée; selon un autre mode de mise en oeuvre, l'image peut être acquise par une caméra équipée d'un capteur linéaire, i.e. dont les détecteurs élémentaires sont alignés et forment sensiblement une seule ligne, ledit capteur linéaire étant configuré pour balayer la scène observée de façon à obtenir une image complète de la scène observée à la fin du balayage. L'homme du métier comprendra que différents moyens sont envisageables pour acquérir une image numérique de la scène observée, et que la résolution de l'image acquise est fonction du moyen d'acquisition utilisé ; ainsi, selon un mode de mise en oeuvre, l'acquisition de l'image avec une caméra à balayage avec un capteur linéaire permet d'obtenir une image comprenant 14000 lignes, chaque ligne comprenant 8192 pixels. Selon un autre mode de mise en oeuvre, avec une caméra avec un capteur matriciel, une image numérique de taille et de résolution moindres est obtenue.

La scène observée considérée ici est une peau d'animal, ladite peau ayant été marquée au laser à des fins d'identification. Le marquage comprend en général une série de lignes, par exemple trois lignes successives, chaque ligne comprenant une série de caractères, les caractères pouvant être des chiffres ou des lettres. Les conditions de réalisation du marquage sont telles que, la peau de l'animal étant posée ou suspendue selon une orientation prédéterminée dans un plan respectivement horizontal ou vertical, de façon à présenter une surface sensiblement plane contenue dans ledit plan, la position du marquage sur cette surface plane peut être déterminée a priori à l'intérieur d'une portion prédéterminée de la surface. Ainsi, par exemple, avec les images acquises selon un mode de mise en oeuvre du procédé avec une caméra équipée d'un capteur linéaire balayant la scène, les images acquises ont une taille de 14000 lignes, chaque ligne comprenant 8192 pixels ; sur ces images seule la partie haute, soit environ 40 cm en hauteur, est utile, car la zone de marquage est nécessairement localisée dans cette partie de l'image. Cette connaissance approximative de la position du marquage sur la surface de la peau est une source d'optimisation du temps de traitement et des ressources de stockage des données numériques sur lesquelles le procédé de traitement est appliqué ; en effet, cette connaissance approximative de la position de la zone de marquage dans l'image acquise avec la caméra permet de prédéterminer une partie de l'image, sur la base d'une dimension de l'au moins une image, afin de réduire la taille de la zone de traitement de l'au moins une image, par exemple en ne retenant pour la partie prédéterminée que les premières lignes, ou que les lignes comprises entre nème et la (n+l)ème ligne ; par exemple, dans le cas d'un capteur linéaire produisant une image de 14000 lignes, la partie présélectionnée comprendra les lignes d'images comprises entre la 2000^{ème} ligne et la 4000^{ème} ligne; la dimension de la partie sélectionnée est déterminée de façon à s'assurer que la partie sélectionnée comprend la zone de marquage considérée. Selon un mode de mise en oeuvre seule la partie prédéterminée est stockée dans une base de données des images acquises, de façon à réduire les besoins en capacité de stockage.

D'autre part l'orientation du marquage relativement à une orientation prédéterminée de la surface de la peau sur laquelle le marquage est imprimé, est variable, de même que la qualité du marquage des différents caractères du marquage.

Selon un mode de mise en oeuvre, l'angle de rotation entre un axe définissant une orientation du marquage et un axe définissant une orientation prédéterminée de la surface de la peau sur laquelle le marquage est imprimé, est variable et compris entre -90 degrés et + 90 degrés.

Après l'étape 101 d'acquisition de l'image de la surface de la peau marquée, une étape de détection 103 d'une zone de marquage ZM, est mise en oeuvre sur l'image acquise, ou sur une partie prédéterminée, comme indiqué ci-avant, de l'image acquise; ladite étape de détection 103 comprend un premier traitement appliqué à l'intérieur d'une fenêtre, ladite fenêtre étant une partie de l'image et ladite zone de marquage ZM à détecter formant une portion de l'image incluse dans ladite partie de l'image. Selon un mode de mise en oeuvre, le premier traitement de détection 103 de la zone de marquage ZM est appliqué à l'intérieur d'une fenêtre à l'intérieur de laquelle la zone de marquage est présumée se trouver. Ladite fenêtre peut ainsi correspondre à la partie prédéterminée de l'image à l'intérieur de laquelle la zone de marquage est présumée se trouver compte tenu des conditions de mise en oeuvre du marquage au laser sur la peau de l'animal. En limitant la taille de la fenêtre à la taille de la partie prédéterminée de l'image, le temps de traitement est réduit.

Selon un autre mode de mise en oeuvre, plusieurs fenêtres, typiquement au moins 2, voire 3 fenêtres ou plus, peuvent être définies à l'intérieur de la partie prédéterminée de l'image, de manière à ce que chaque fenêtre recouvre partiellement au moins une autre fenêtre de l'au moins deux, voire trois fenêtres. Comme cela est illustré sur la figure 1, selon un mode de mise en oeuvre, le procédé comprend une étape de définition 102 d'au moins trois fenêtres de traitement F1, F2, F3 à l'intérieur de la partie prédéterminée de l'image, chaque fenêtre recouvrant partiellement au moins une autre fenêtre de l'au moins trois fenêtres. Par exemple, la partie prédéterminée de l'image est découpée selon trois fenêtres, chaque fenêtre F1, F2, F3 ayant une taille, en nombre de colonnes de pixels, égale à la moitié du nombre de colonne de pixels de la partie présélectionnée. Ainsi, par exemple, la première fenêtre F1 correspond à une première moitié de la partie présélectionnée ; la deuxième fenêtre F3 correspond à une deuxième moitié de la partie présélectionnée ; et la troisième fenêtre F2 correspond à une troisième moitié de la partie présélectionnée, située à cheval sur la première fenêtre F1 et sur la deuxième fenêtre F3.

Ainsi, à l'intérieur d'une ou plusieurs fenêtres, un premier traitement de détection 103 d'une zone de marquage est mis en oeuvre. Lorsque ledit premier traitement de détection 103 est appliqué à l'intérieur de plusieurs fenêtres, il est alors appliqué à l'intérieur de chaque fenêtre, et l'étape de détection 103 comprend en outre le calcul d'un score de détection pour chaque zone de marquage ZM détectée à l'intérieur de chaque fenêtre, et une sous-étape de sélection 104 de la zone de marquage ZM sur la base du score de détection de la zone de marquage. Ainsi, par exemple, l'étape de détection 103 de la zone de marquage ZM sélectionnera la zone de marquage ZM qui a été détecté dans une des fenêtres avec un meilleur score de détection que les autres zones de marquages ZM détectées dans chacune des autres fenêtres.

Une zone de marquage ZM ayant été détectée dans l'image, à l'issue l'étape de détection 103 d'une zone de marquage, une étape de détermination 105 d'une orientation de la zone de marquage ZM, ladite détermination comprenant un deuxième traitement. Comme cela a été indiqué ci-avant les conditions mise en oeuvre du marquage au laser sont telles que l'orientation du marquage est variable.

Par convention, l'orientation du marquage est définie par une direction dans le plan de la surface de la peau sur laquelle est imprimé ledit marquage, ladite direction étant transversale aux lignes de caractères qui constituent ledit marquage. L'orientation peut ainsi se définir par un angle formé entre cette direction et une direction prédéterminée sur la surface de la peau.

Après avoir déterminé l'orientation du marquage, une nouvelle image de la zone de marquage ZM, la nouvelle image étant obtenue à partir de la portion de l'image correspondant à la zone de marquage ZM, telle que détectée par l'étape de détection 103 de la zone de marquage ; pour obtenir ladit nouvelle image, un calcul est réalisé en fonction de l'orientation déterminée à l'étape précédente pour obtenir une nouvelle image rééchantillonée de sorte que les lignes de pixels de la nouvelle image soient sensiblement transversales à la direction définissant l'orientation de la zone de marquage.

Un troisième traitement de détection 106 des caractères compris dans la zone de marquage ZM est alors mis en oeuvre sur la nouvelle image de la zone de marquage ZM. A l'issue de cette étape de détection 106 des caractères compris dans la zone de marquage, différentes fenêtres sont identifiées dans la nouvelle image de la zone de marquage, qui ont chacune approximativement la taille d'un des caractères imprimés dans la zone de marquage, et qui contiennent chacune un des caractères de la zone de marquage. Ainsi, les caractères sont détectés mais ne sont pas encore reconnus.

Les caractères désignent des lettres ou des chiffres.

La reconnaissance des caractères détectés est le résultat d'une étape suivante de classification 107, 108 des caractères détectés. Cette étape comprend comprend un quatrième traitement 107 de classification des lettres, et un cinquième traitement 108 de classification des chiffres. Le quatrième et le cinquième traitement 107, 108 s'appliquent à chacune des fenêtres identifiées à l'intérieur de la nouvelle image de la zone de marquage ZM par le troisième traitement de détection 106 des caractères.

Selon un mode de mise en oeuvre, la quatrième traitement 107 de classification des lettres est basé sur un positionnement des lettres au début de l'au moins une ligne. Par exemple, s'il est connu a priori que les caractères de type lettre ne figureront dans le marquage qu'au début de la dernière ligne du marquage, alors cette connaissance a prirori est prise en compte dans le quatrième traitement. Selon un mode de mise en oeuvre, le nombre de lettres positionnées sur la dernière ligne peut également être connu a priori, et un dictionnaire de codes définissant la liste des différentes combinaisons possibles de lettres peut également faire partie des connaissances a priori. Ainsi, selon un mode de mise en oeuvre, le quatrième traitement 107 de classification des lettres comprend l'utilisation d'un dictionnaire de codes à 3 lettres.

Le cinquième traitement 108 de classification des chiffres s'applique indépendamment à chaque caractère, à l'intérieur de chacune des fenêtres identifiées à l'intérieur de la nouvelle image de la zone de marquage ZM par le troisième traitement de détection 106 des caractères.

Une fois que les différents chiffres et lettres ont été reconnus par le quatrième traitement et le cinquième traitement, un sens de lecture est défini en fonction de l'orientation de la zone de marquage, par exemple de droite à gauche le long de l'au moins une ligne, et de haut en bas le long d'une direction définie par l'orientation de la zone de marquage. Sur la base de ce sens de lecture, et du positionnement respectif des différents chiffres et lettres, un ordonnancement des chiffres et des lettres est défini.

Selon un mode de mise en oeuvre, des détections aberrantes de caractères sont écartées lorsqu'elles n'appartiennent à aucune ligne de la zone de marquage.

Ainsi comme cela est illustré sur la figure 1, et selon un mode de mise en oeuvre, le procédé de traitement d'image selon l'invention comprend cinq traitement :
- un premier traitement de l'étape de détection 103 de la zone de marquage ;
- un deuxième traitement de l'étape de détermination 105 d'une orientation de la zone de marquage ZM ;
- un troisième traitement de l'étape de détection 106 des caractères compris dans la zone de marquage ZM ;
- un quatrième traitement 107 de classification des lettres détectées dans la zone de marquage ZM ;
- un cinquième traitement 108 de classification des chiffres détectés dans la zone de marquage ZM

Selon un mode de mise en oeuvre, le premier traitement de l'étape de détection 103 de la zone de marquage comprend la mise en oeuvre d'un premier réseau de neurone, le premier réseau de neurone étant de préférence du type FASTER-RCNN et comprenant un module INCEPTIONV2.

Selon un mode de mise en oeuvre, le premier traitement de l'étape de détection 103 de la zone de marquage comprend la mise en oeuvre d'un premier réseau de neurone du type FASTER-RCNN et comprenant un module INCEPTIONV2, le premier réseau de neurone étant entraîné au préalable au cours d'une étape d'apprentissage, par exemple déterminée par les paramètres d'apprentissage suivants :
- Résolution d'image : 512x512, la résolution étant ici définie en nombre de lignes d'images x nombres de pixels d'images par ligne d'image;
- Nombre de lots ou batchs : 10 ;
- Algorithme d'optimisation : descente de gradient avec inertie ;
- Nombre d'itérations de backpropagation en nombre de batchs : 12000 ;
- Vitesse d'apprentissage :
   ∘ step 0 -> learning rate: 2^{∗}e⁻⁰⁴
   ∘ step 5000 → learning rate: 2^{∗}e⁻⁰⁵
   ∘ step 8000 → learning rate: 2^{∗}e⁻⁰⁶

Selon un mode de mise en oeuvre, le deuxième traitement de l'étape de détermination 105 d'une orientation de la zone de marquage ZM comprend la mise en oeuvre d'un deuxième réseau de neurone, le deuxième réseau de neurone étant de préférence du type VGG16.

Selon un mode de mise en oeuvre, le deuxième traitement de l'étape de détermination 105 d'une orientation de la zone de marquage ZM comprend la mise en oeuvre d'un deuxième réseau de neurone, le deuxième réseau de neurone étant de préférence du type VGG16, le deuxième réseau de neurone étant entraîné au préalable au cours d'une étape d'apprentissage, par exemple déterminée par les paramètres d'apprentissage suivants :
- Augmentation de données : génération aléatoire d'images de sorte à avoir un grand nombre d'images dont les angles sont compris entre - 90 et 90 degrés ;
- Résolution d'image : 224x224, la résolution étant ici définie en nombre de lignes d'images x nombres de pixels d'images par ligne d'image;
- Nombre d'itérations de backpropagation en nombre d'époques: 500 ;
- Algorithme d'optimisation : ADAM

Selon un mode de mise en oeuvre, le troisième traitement de l'étape de détection 106 des caractères compris dans la zone de marquage ZM comprend la mise en oeuvre d'un troisième réseau de neurone, le troisième réseau de neurone étant de préférence du type FASTER-RCNN et comprenant un module INCEPTIONV2.

Selon un mode de mise en oeuvre, le troisième traitement de l'étape de détection 106 des caractères compris dans la zone de marquage ZM comprend la mise en oeuvre d'un troisième réseau de neurone du type FASTER-RCNN et comprenant un module INCEPTIONV2, le troisième réseau de neurone étant entraîné au préalable au cours d'une étape d'apprentissage, par exemple déterminée par les paramètres d'apprentissage suivants :
- Résolution d'image : 340x450, la résolution étant ici définie en nombre de lignes d'images x nombres de pixels d'images par ligne d'image;
- Nombre de lots ou batchs : 10 ;
- Algorithme d'optimisation : descente de gradient avec inertie ;
- Nombre d'itérations de backpropagation en nombre de batchs : 12000 ;
- Vitesse d'apprentissage :
   ∘ step 0 -> learning rate: 2^{∗}e⁻⁰⁴
   ∘ step 5000 → learning rate: 2^{∗}e⁻⁰⁵
   ∘ step 8000 → learning rate: 2^{∗}e⁻⁰⁶

Selon un mode de mise en oeuvre, le quatrième traitement 107 de classification des lettres comprend la mise en oeuvre d'un quatrième réseau de neurone, le quatrième réseau de neurone étant de préférence du type LeNet.

Selon un mode de mise en oeuvre, le cinquième traitement 108 de classification des chiffres comprend la mise en oeuvre d'un cinquième réseau de neurone, le cinquième réseau de neurone étant de préférence du type LeNet.

Selon un mode mise en oeuvre, le cinquième réseau de neurone du type LeNet est entraîné au cours d'une étape d'apprentissage sur des portions d'images, comprenant, par exemple, 28 lignes, et 28 pixels d'image par ligne.

## Revendications

1. Procédé (100) de traitement d'image assisté par ordinateur, pour la lecture d'un marquage sur une surface d'un support en peau d'animal, le procédé comprenant les étapes suivantes :
- acquisition (101) par une caméra d'une image de la surface du support;
- détection (103) d'une zone de marquage (ZM), ladite étape de détection comprenant un premier traitement appliqué à l'intérieur d'une fenêtre, ladite fenêtre étant une partie de l'image et ladite zone de marquage étant une portion de l'image incluse dans ladite partie de l'image;
- détermination (105) d'une orientation de la zone de marquage (ZM), ladite détermination comprenant un deuxième traitement;
- détection (106) des caractères compris dans la zone de marquage (ZM), ladite détection comprenant un troisième traitement appliqué à une nouvelle image de la zone de marquage (ZM), la nouvelle image étant obtenue à partir de la portion de l'image correspondant à la zone de marquage (ZM) par un calcul réalisé en fonction de l'orientation déterminée à l'étape précédente;
- classification (107, 108) de chaque caractère détecté dans la nouvelle image de la zone de marquage (ZM) ;
- ordonnancement (109) des caractères détectés et classifiés dans la nouvelle image de la zone de marquage (ZM), selon un sens de lecture des caractères défini sur la base de l'orientation de la zone de marquage.

2. Procédé (100) selon la revendication 1, dans lequel la caméra comprend un capteur matriciel, ou un capteur linéaire.

3. Procédé (100) selon l'une des revendications 1 ou 2, comprenant une étape de définition (102) d'au moins deux fenêtres de traitement (F1, F2) à l'intérieur d'une partie présélectionnée de l'image, chaque fenêtre recouvrant partiellement au moins une autre fenêtre de l'au moins deux fenêtres.

4. Procédé (100) selon la revendication 3, dans lequel le premier traitement est appliqué à l'intérieur de chaque fenêtre de l'au moins deux fenêtres, l'étape de détection (103) comprenant en outre un calcul d'un score de détection pour chaque zone de marquage (ZM) détectée à l'intérieur de chaque fenêtre de l'au moins deux fenêtres, et une sous-étape de sélection (104) de la zone de marquage (ZM) sur la base du score de détection de la zone de marquage.

5. Procédé selon l'une des revendications précédentes, dans lequel la classification (107, 108) de chaque caractère détectés à l'étape de détection (106) des caractères comprend un quatrième traitement (107) de classification des lettres, et un cinquième traitement (108) de classification des chiffres.

6. Procédé (100) selon l'une des revendications précédentes, dans lequel le premier traitement de l'étape de détection (103) de la zone de marquage comprend la mise en oeuvre d'un premier réseau de neurone, le premier réseau de neurone étant de préférence du type FASTER-RCNN et comprenant un module INCEPTIONV2.

7. Procédé (100) selon l'une des revendications précédentes, dans lequel le deuxième traitement de l'étape de détermination (105) d'une orientation de la zone de marquage (ZM) comprend la mise en oeuvre d'un deuxième réseau de neurone, le deuxième réseau de neurone étant de préférence du type VGG16.

8. Procédé (100) selon l'une des revendications précédentes, dans lequel le troisième traitement de l'étape de détection (106) des caractères compris dans la zone de marquage (ZM) comprend la mise en oeuvre d'un troisième réseau de neurone, le troisième réseau de neurone étant de préférence du type FASTER-RCNN et comprenant un module INCEPTIONV2.

9. Procédé (100) selon l'une des revendications 5 à 8, dans lequel le quatrième traitement (107) de classification des lettres comprend la mise en oeuvre d'un quatrième réseau de neurone, le quatrième réseau de neurone étant de préférence du type LeNet.

10. Procédé (100) selon l'une des revendications 5 à 9, dans lequel le cinquième traitement (108) de classification des chiffres comprend la mise en oeuvre d'un cinquième réseau de neurone, le cinquième réseau de neurone étant de préférence du type LeNet.
